# FASCICULE DE BREVET EUROPEEN

(11) **EP 2 753 856 B1**
(45) Date de publication et mention de la délivrance du brevet: **03.06.2015**
(21) Numéro de dépôt: 12762350.2
(22) Date de dépôt: 04.09.2012
(51) Int. Cl.: F16L 3/04, F16L 3/13, B60T 17/04

(54) **ÉLÉMENT DE FIXATION ET DISPOSITIF DE FIXATION A UN SUPPORT D'UN CORPS TUBULAIRE PORTANT A SA PÉRIPHÉRIE AVEC LIBERTÉ DE MOUVEMENT UN ORGANE, AINSI QUE PROCÉDÉ DE FIXATION DUDIT CORPS TUBULAIRE**
ROHRSTÜTZANORDNUNG DIE LIMITIERTE BEWEGUNGEN ZULÄSST, UND - STÜTZVERFAHREN
PIPE SUPPORT MEANS ENABLING LIMITED MOVEMENT AND - SUPPORT METHOD

(30) Priorité: 09.09.2011 FR 1158003
(43) Date de publication de la demande: 16.07.2014
(73) Titulaire: Peugeot Citroën Automobiles SA, 78140 Vélizy Villacoublay (FR)
(72) Inventeur: DENNEULIN, Stephane, F-92700 Colombes (FR); SAILLARD, David, F-39100 Dole (FR)
(74) Mandataire: Rosenberg, Muriel Sylvie
(86) Numéro de dépôt international: PCT/FR2012/051973
(87) Numéro de publication internationale: WO 2013/034842

(56) Documents cités:
- EP-A2- 1 275 890
- GB-A- 2 158 143
- US-A1- 2002 053 253
- US-B1- 6 257 530

## Description

L'invention concerne, de manière générale, la fixation à un support d'un corps tubulaire de type canalisation, tuyau de transport de fluide ou câble, ledit corps tubulaire portant, à sa périphérie, avec liberté de mouvement, un organe. Elle concerne plus particulièrement, mais pas exclusivement, la fixation temporaire ou définitive d'une canalisation hydraulique de frein d'un véhicule, notamment de véhicule automobile, sur une structure du véhicule, par exemple sur la caisse du véhicule. Ceci est réalisé avantageusement pour une extrémité de la canalisation hydraulique portant un organe présentant une liberté de mouvement par rapport à ladite canalisation, notamment par l'intermédiaire d'un obturateur porté par ladite extrémité, l'élément de fixation étant alors porté par l'obturateur.

La fixation à un support d'un corps tubulaire nécessite un certain nombre de dispositifs de fixation tout au long de son parcours. Le nombre de systèmes de fixation dépend de la longueur de la canalisation, de son environnement tel que la forme de la caisse et des différentes pièces présentes dans cet environnement. Ceci permet de garantir un positionnement précis du corps tubulaire lors de son montage en usine terminale ou, en cas de maintenance ou réparation, afin de pouvoir repositionner le plus précisément possible ledit corps à l'endroit où le corps doit se trouver où se trouvait avant l'intervention, ce qui évite des détériorations de la canalisation lors d'une opération de coiffage.

Cela est particulièrement le cas lorsque le corps tubulaire porte un organe à sa périphérie avec une liberté de mouvement par rapport au corps tubulaire. Par exemple, le corps tubulaire peut présenter une extrémité portant à sa périphérie un organe rotatif autour de l'axe de révolution du corps tubulaire, par exemple un cavalier. Ce cavalier est utile pour un raccordement ultérieur du corps tubulaire à un autre élément.

Il convient qu'un tel organe porté par la périphérie du corps tubulaire ne soit pas endommagé quand le corps tubulaire est fixé à son support. Pour ce faire, il convient de conserver l'organe dans une position le protégeant lors de la fixation dudit corps.

Le document US-A-2003/015177 ou le US2002/0053253A1 divulgue un dispositif de fixation d'agrafe retenant de façon amovible un tube sur un support avec indexage du tube dans l'agrafe. Si une mise en position du tube dans l'agrafe est obtenue dans ce document, celui-ci ne décrit aucun organe porté par le tube à sa périphérie et donc ne donne aucune indication quant à la manière de placer ledit organe dans une position stable lors de la fixation.

Le but de l'invention est de proposer un élément de fixation pour la fixation à un support d'un corps tubulaire portant un organe à sa périphérie qui puisse garantir un maintien optimal de la canalisation sur le support et un positionnement précis dudit corps et de son organe par rapport au support tout en permettant un montage et un démontage aisés pour un opérateur.

Pour atteindre cet objectif, il est prévu selon l'invention un élément de fixation à un support d'un corps tubulaire portant à sa périphérie avec liberté de mouvement un organe, ledit élément présentant une partie principale sous forme d'une bague entourant directement ou indirectement au moins partiellement ledit corps tubulaire, à partir de laquelle bague s'étend un bras de solidarisation vers le support en étant apte à être solidarisé audit support, caractérisé en ce que ledit élément comporte des moyens d'indexage dans une position donnée dudit organe porté par ledit corps.

L'effet technique obtenu par les moyens d'indexage est d'assurer l'immobilisation dudit organe dans au moins une position stable voulue après l'avoir placé dans ladite position, par exemple dans le cas d'un organe tournant autour du corps, un blocage en rotation dudit organe par rapport à l'élément de fixation du corps tubulaire.

Avantageusement, l'extrémité libre du bras de solidarisation porte une protubérance dépassant transversalement du bras et apte à réaliser la solidarisation par clippage de l'élément avec le support, ladite protubérance formant également lesdits moyens d'indexage en formant butée en rotation pour ledit organe.

Avantageusement, lesdits moyens d'indexage forment des butées en rotation pour ledit organe en étant soit sous la forme de deux plaques portées symétriquement par le bras, les plaques s'étendant de chaque côté du bras perpendiculairement audit bras ou soit sous la forme d'un pavé porté par la bague à une portion de ladite bague diamétralement opposée audit bras.

Avantageusement, le bras de solidarisation est formé de deux branches s'étendant parallèlement l'une à l'autre vers le support avec l'extrémité libre d'une branche recourbée vers l'extrémité libre de l'autre branche, ces deux branches étant déformables sous contrainte transversale afin d'être rapprochées l'une de l'autre.

L'invention concerne aussi un dispositif de fixation à un support d'un corps tubulaire portant à sa périphérie avec liberté de mouvement un organe, caractérisé en ce qu'il comprend un tel élément de fixation, le dispositif comprenant une pièce de réception de l'élément de fixation sur laquelle pièce est montée la bague dudit élément, la pièce de réception étant montée autour du corps tubulaire.

Avantageusement, la bague de l'élément est montée autour de la pièce de réception par coulissement axial autour de ladite pièce.

Avantageusement, la bague de l'élément est montée autour de la pièce de réception par pression transversale sur ladite pièce, la bague de l'élément de fixation présentant une interruption de son pourtour facilitant sa mise en place autour de la pièce de réception par appui de l'interruption de la bague transversalement à ladite pièce de réception et déformation élastique de ladite interruption pour l'insertion de la bague autour de ladite pièce.

L'invention concerne aussi un corps tubulaire présentant une extrémité libre destinée à être fixée à un support, cette extrémité portant à sa périphérie un organe rotatif autour dudit corps, caractérisé en ce qu'il est muni d'un tel dispositif de fixation, la pièce de réception étant un obturateur recouvrant ladite extrémité libre dudit corps.

Avantageusement, le corps tubulaire est une canalisation, l'organe rotatif étant sous forme d'un cavalier oméga dont une portion de chacune de ses extrémités libres est en butée sur un moyen d'indexage respectif du dispositif de fixation.

L'invention concerne aussi un procédé de fixation à un support d'un corps tubulaire portant à sa périphérie avec liberté de mouvement un organe, ce procédé mettant en oeuvre un dispositif de fixation muni d'une pièce de réception d'un élément de fixation portant un bras dont l'extrémité libre est apte à coopérer avec un moyen complémentaire prévu dans le support pour la solidarisation du corps tubulaire avec le support et des moyens d'indexage dans une position donnée dudit organe, la pièce de réception étant destinée à être fixée à une extrémité du corps tubulaire, ledit procédé comprenant les étapes suivantes :
- montage ou intégration respective de l'élément de fixation sur ou dans le dispositif de fixation,
- montage du dispositif de fixation sur l'extrémité du corps tubulaire, d'une part, en présentant l'extrémité libre du bras en regard du moyen complémentaire dudit support et, d'autre part, en indexant dans une position donnée ledit organe, l'étape de montage de l'élément de fixation et l'étape de montage du dispositif de fixation pouvant être inversées,
- solidarisation du corps tubulaire avec le support par coopération entre extrémité libre du bras et moyen complémentaire du support, l'indexage dudit organe étant maintenu.

D'autres caractéristiques et avantages de l'invention ressortiront clairement de la description qui en est faite ci-après, à titre indicatif et nullement limitatif, en référence aux dessins annexés, dans lesquels :

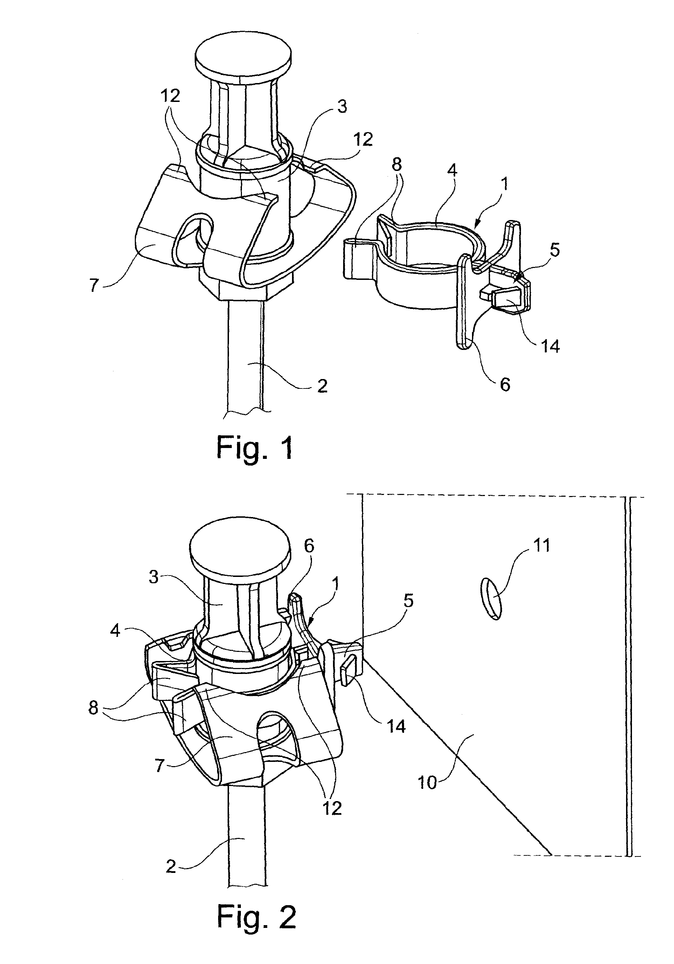

- la figure 1 est une représentation schématique d'une vue en perspective d'un dispositif de fixation à un support pour une extrémité d'un corps tubulaire, le dispositif de fixation étant monté sur le corps tubulaire et présentant un élément de fixation selon un premier mode de réalisation de la présente invention comprenant une bague ouverte avec un bras de solidarisation et des moyens d'indexage sous forme de plaques portées par le bras, cet élément n'étant pas encore monté sur ledit dispositif,
- la figure 2 est une représentation schématique d'une vue en perspective du mode de réalisation selon la figure 1 d'un dispositif de fixation à un support pour une extrémité d'un corps tubulaire, l'élément de fixation étant alors monté sur le dispositif et l'ensemble monté dispositif de fixation sur corps tubulaire étant en cours de solidarisation avec le support,

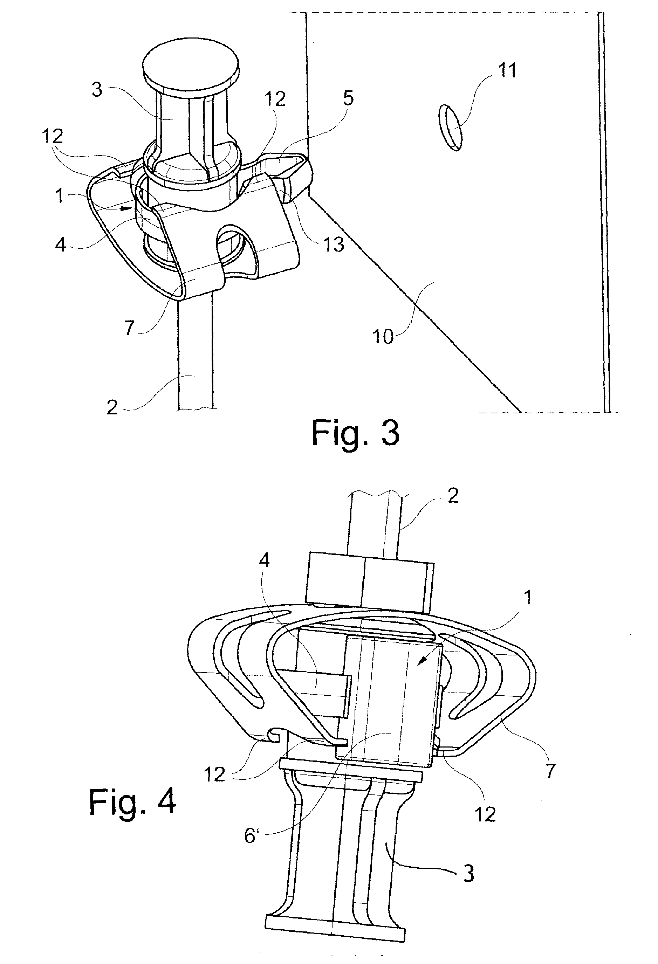

- la figure 3 une représentation schématique d'une vue en perspective d'un dispositif de fixation à un support pour une extrémité d'un corps tubulaire avec un élément de fixation selon un second mode de la présente invention, ledit élément présentant une bague fermée et des moyens d'indexage sous forme d'une protubérance portée par le bras de solidarisation, l'élément de fixation étant alors monté sur le dispositif de fixation lui-même monté sur le corps tubulaire, ledit corps étant en cours de solidarisation avec le support,
- la figure 4 une représentation schématique d'une vue en perspective d'un dispositif de fixation à un support pour une extrémité d'un corps tubulaire avec un élément de fixation selon un troisième mode de la présente invention, ledit élément présentant une bague fermée par un pavé faisant office aussi de moyens d'indexage, ledit élément étant alors monté sur le dispositif de fixation lui-même monté sur le corps tubulaire.

Les figures 1 à 4 montrent un corps tubulaire 2, notamment une canalisation, dont une extrémité porte un obturateur 3 recouvrant ladite extrémité. Aux figures, dans sa zone d'extrémité, mais cela peut être étendu à n'importe quel autre endroit de sa périphérie, le corps tubulaire 2 porte un organe 7. Cet organe 7 est porté avec liberté de mouvement par rapport au corps tubulaire 2. L'organe 7 peut être un moyen de mise en tension qui est sous la forme d'un cavalier oméga 7 rotatif autour de l'axe du corps tubulaire 2.

Le cavalier oméga 7 est disposé autour du corps tubulaire 2 à la base de l'obturateur 3 recouvrant une partie d'extrémité du corps tubulaire 2. Un écrou assure le maintien du cavalier oméga 7 de l'autre côté de l'obturateur 3. Il est cependant à garder à l'esprit qu'un autre élément qu'un cavalier oméga peut être utilisé comme organe porté par le corps tubulaire 2, cet organe pouvant présenter une autre liberté de mouvement par rapport audit corps 2 qu'une liberté en rotation autour dudit corps 2, par exemple une possibilité de translation de l'organe 7 par rapport audit corps 2.

Selon la présente invention, le corps tubulaire 2 est à fixer à un support, non montré à la figure 1 mais visible à la figure 2 sous la référence 10. A cette figure 2, le support 10 est sensiblement plan, la partie d'extrémité du corps tubulaire 2 étant sensiblement parallèle au support 10. Le support 10 comprend un moyen complémentaire 11 pour assurer la solidarisation entre le corps tubulaire 2 et un dispositif de fixation qui va maintenant être explicité.

En se référant toujours aux figures 1 à 4, le dispositif de fixation du corps tubulaire est composé d'un obturateur 3, formant pièce de réception pour un élément de fixation 1 destiné à être monté autour de ladite pièce de réception. L'élément de fixation 1 présente une partie principale sous forme d'une bague 4 qui est montée autour de l'obturateur 3 formant pièce de réception du dispositif et donc indirectement autour du corps tubulaire 2, l'obturateur 3 étant intercalé entre la bague 4 et le corps tubulaire 2.

Dans un mode de réalisation non montré aux figures, l'élément de fixation 1 peut aussi être intégré dans l'obturateur 3 au lieu d'être monté sur celui-ci. Il est aussi possible que l'élément de fixation 1 soit monté directement sur le corps tubulaire 2 quand il n'y a pas besoin de pièce de réception, par exemple d'obturateur, ceci par exemple pour une partie du corps tubulaire 2 qui n'est pas une partie d'extrémité. Dans ce cas, la bague 4 entoure directement le corps tubulaire 2.

L'utilisation d'un obturateur 3 est très avantageuse en cas de fixation temporaire du corps tubulaire 2, ledit obturateur 3 étant lors de la fixation finale dudit corps 2 ôté de l'extrémité libre dudit corps 2. Par contre, l'élément de fixation 1 conforme à la présente invention n'est pas limité à une fixation temporaire ni à l'association avec une pièce de réception, par exemple sous la forme d'un obturateur 3, mais peut être directement posé sur le corps tubulaire 2.

Le montage de l'élément de fixation 1 autour du corps tubulaire 2 se fait avantageusement à proximité de l'organe 7 porté par ledit corps 2, afin que l'élément de fixation 1 puisse remplir un rôle de maintien en position de l'organe 7 porté par le corps tubulaire 2.

Conformément à l'invention, l'élément de fixation 1 comporte des moyens d'indexage 6, 6bis, 13 dans une position donnée de l'organe 7 porté par le corps tubulaire 2. Ces moyens d'indexage 6, 6bis, 13 seront ultérieurement plus précisément décrits. Ces moyens d'indexage 6, 6bis, 13 sont avantageusement des moyens de blocage de l'organe 7 par rapport au corps tubulaire 2 et de maintien en position dudit organe 7 quand le corps tubulaire 2 est fixé au support 10. Ces moyens d'indexage 6, 6bis, 13 assurent le positionnement et l'immobilisation dudit organe 7 dans au moins une position stable, par exemple dans le cas d'un organe 7 tournant autour du corps 2, un blocage en rotation dudit organe 7 par rapport à l'élément de fixation 1 du corps tubulaire 2.

Pendant le placage du corps tubulaire 2 sur son support 10, l'organe 7, illustré aux figures sous la forme d'un cavalier, est maintenu dans un plan parallèle audit support 10 et ne risque pas d'être endommagé lors dudit placage.

Aux figures 1 à 4, la bague 4 entoure au moins partiellement l'obturateur 3 et donc indirectement le corps tubulaire 2. Un entourage partiel, non encore effectué peut être obtenu par la bague 4 montrée aux figures 1 et 2, la bague 4 présentant des bords 8 délimitant une interruption de la bague 4 formant une ouverture sur la périphérie de la bague 4.

Dans le cas d'une ouverture à la périphérie de la bague 4 avec interruption de son pourtour, le montage de la bague 4 sur l'obturateur 3 se fait en pressant les bords 8 de l'ouverture contre l'obturateur 3. La déformation des bords 8 provoque leur écartement et un agrandissement de l'ouverture ainsi que l'insertion transversale de la bague 4 autour de l'obturateur. Après cette insertion, les bords 8 sont rappelés l'un en direction de l'autre et maintiennent la bague 4 en position autour de l'obturateur 3. Le montage de la bague 4 sur l'obturateur 3 se fait donc transversalement avec une telle bague 4 présentant une interruption.

Dans le cas d'une bague 4 continue sur toute sa périphérie, comme montré à la figure 3, le montage de la bague 4 sur l'obturateur 3 se fait par coulissement selon l'axe du corps tubulaire 2, la bague 4 étant par exemple introduite par l'extrémité libre de l'obturateur 3 et amené par translation le long de l'axe de l'obturateur 3 dans sa position de fixation.

Dans le cas d'une bague 4 avec une ouverture, c'est-à-dire entourant partiellement l'obturateur 3, il est avantageux que la force d'arrachage de l'extrémité du bras 5 hors de son moyen complémentaire 11 porté par le support 10 soit inférieure à la force d'arrachage de la bague 4 par rapport à l'obturateur 3 afin que cette liaison bague avec obturateur soit la plus solide.

La figure 4 montre une bague 4 qui peut être continue en comprenant sur une partie de sa périphérie un pavé 6bis la fermant. Le pavé 6bis fait saillie de la bague 4 et dépasse radialement de la bague 4. Le pavé 6bis sert de moyens d'indexage, ce qui sera ultérieurement expliqué. En alternative, le pavé 6bis peut être fixé sur l'obturateur 3, chacune des extrémités de la bague 4 alors ouvertes butant sur des bords opposés de ce pavé 6bis.

Une caractéristique de l'élément de fixation 1 est qu'il porte un bras de solidarisation 5. Ce bras de solidarisation 5 s'étend de la bague 4 vers le support 10, visible aux figures 2 et 3. Ce bras de solidarisation 5 présente une extrémité libre avantageusement pointue qui pénètre dans le moyen complémentaire 11 de solidarisation porté par le support 10, aux figures 2 et 3 sous forme d'un alésage. La solidarisation se fait avantageusement par clippage de l'extrémité libre du bras 5 sur ledit moyen complémentaire, dans le cas montré aux figures contre les parois de l'alésage 11.

Aux figures 1 et 2, le bras 5 comprend, à son extrémité libre pointant vers le support, des ailettes 14 flexibles inclinées par rapport au bras 5 et pointant vers la bague 4, ces ailettes 14 étant élastiquement déformables et assurant l'effet de clippage une fois complètement introduites dans le moyen complémentaire 11 de solidarisation porté par le support 10 après avoir été rapprochées l'une de l'autre pour le passage à l'intérieur dudit moyen 11 sous forme d'un alésage.

Pour toutes les figures, le cavalier oméga 7 porté par le corps tubulaire 2 présente une base portée par le corps tubulaire 2 et deux ailes recourbées respectivement sur des portions opposées de l'obturateur 3. Avantageusement, les extrémités libres des ailes recourbées reposent partiellement sur la bague 4 montée sur l'obturateur 3. L'extrémité de chacune des ailes est sensiblement de la forme de la portion de l'obturateur 3 qui la reçoit, en étant par exemple arrondie. Les bords latéraux 12 des ailes du cavalier oméga illustrant l'organe 7 porté par le corps tubulaire 2 sont avantageusement les éléments de l'organe qui coopèrent avec les moyens d'indexage 6, 6bis et 13 de l'élément de fixation 1 pour le maintien en position dudit organe 7.

Trois différents modes de réalisation des moyens d'indexage 6, 6bis et 13 présents sur l'élément de fixation 1 pour l'indexage de l'organe 7 porté par le corps tubulaire 2 vont maintenant être décrits.

Pour un premier mode de réalisation illustré à la figure 3, le bras 5 est formé de deux branches s'étendant parallèlement l'une à l'autre vers le support 10 avec leur extrémité libre respective recourbée l'une vers l'autre. Ces deux branches sont déformables sous contrainte transversale afin d'être rapprochées l'une de l'autre, ceci lors du passage de leurs portions d'extrémité à travers l'alésage 11. Il est prévu sur chacune des deux branches une protubérance 13. Ces protubérances 13 peuvent servir à la fois d'indexage comme de moyens de clippage après avoir été introduites dans le moyen complémentaire de solidarisation sous la forme de l'alésage 11.

Un bord latéral 12 de chaque aile du cavalier 7, avantageusement en forme de pointe tandis que le reste de l'extrémité d'une aile est avantageusement arrondie, est inséré entre, d'un côté, une protubérance 13 respective du bras 5 et, de l'autre côté, la bague 4.

Quand l'extrémité libre du bras 5 est introduite dans le moyen complémentaire 11 de solidarisation porté par le support 10, les protubérances 13 pénètrent dans le moyen complémentaire 11 mais un bord latéral 12 de chaque aile du cavalier 7 est maintenu entre, d'un côté, la bague 4 et, de l'autre côté, le support 10 formant avantageusement une surface plane.

Il est à noter que ce mode de réalisation peut aussi être réalisé avec un bras 5 ne comportant qu'une branche. Dans ce cas, une protubérance 13 est respectivement portée sur chaque côté du bras 5 quand ledit bras 5 est d'un seul tenant.

Un second mode de réalisation des moyens de blocage en rotation est montré aux figures 1 et 2. Les moyens d'indexage dans ce second mode sont sous la forme de deux plaques 6 portées symétriquement par le bras 5, à ces figures 1 et 2 d'un seul tenant. Ce bras 5 peut être aussi muni de deux branches comme à la figure 3. Les plaques 6 s'étendent de chaque côté du bras 5 perpendiculairement audit bras 5 en présentant chacune un espacement par rapport à la bague 4.

Comme dans le premier mode, pour chacune des ailes du cavalier oméga 7, un des bords 12 de chacune des extrémités libres des ailes du cavalier 7 est retenu entre la bague 4 et une plaque 6 respective portée par le bras 5 de l'élément de fixation 1. Il est ainsi assuré un blocage en rotation dudit cavalier oméga 7 par rapport au dispositif de fixation composé de l'obturateur 3 et de l'élément de fixation 1 muni de sa bague 4 portant le bras 5.

Un troisième mode de réalisation des moyens d'indexage de l'organe 7 est montré à la figure 4. Dans ce troisième mode de réalisation, un des bords 12 de l'extrémité libre de chaque aile est en butée contre un pavé 6bis porté par la bague 4 de l'élément de fixation 1. Alternativement, le pavé 6bis peut être porté par l'obturateur 3 dans une position où il referme complètement ladite bague 4. Le pavé 6bis est localisé à une portion de la bague 4 diamétralement opposée à sa partie portant le bras 5 et présente une plus grande épaisseur que ladite bague 4 afin qu'un bord 12 d'extrémité de chaque aile du cavalier oméga 7 bute contre respectivement un bord opposé du pavé 6bis.

Dans les trois modes décrits ci-dessus, quand il est utilisé un obturateur 3 temporaire, lors du retrait dudit obturateur les moyens d'indexage 6, 6bis, 13 n'interfèrent pas avec l'organe 7, ce qui permet un enlèvement facilité du dispositif de fixation ci-dessus décrit, dispositif qui n'est alors seulement que temporaire.

Un procédé de fixation à un support 10 d'un corps tubulaire 2 portant un organe 7 à sa périphérie avec le dispositif de fixation ci-dessus décrit, comprend les étapes suivantes :
- montage ou intégration respective de l'élément de fixation 1 sur ou dans le dispositif de fixation,
- montage du dispositif de fixation sur l'extrémité du corps tubulaire 2, d'une part, en présentant l'extrémité libre du bras 5 en regard du moyen complémentaire dudit support 10 et, d'autre part, en indexant dans une position donnée ledit organe 7, l'étape de montage de l'élément de fixation 1 et l'étape de montage du dispositif de fixation pouvant être inversées,
- solidarisation du corps tubulaire 2 avec le support 10 par coopération entre extrémité libre du bras 5 et moyen complémentaire 11 du support 10, l'indexage dudit organe 7 étant maintenu.

Avantageusement, sans que cela soit limitatif, le corps tubulaire 2 est une canalisation de liquide de freinage avec un obturateur 3 d'extrémité temporaire avant montage final de la canalisation et raccordement au système de freinage, le corps tubulaire 2 portant à son extrémité recouverte par l'obturateur 3 un cavalier oméga 7 tournant autour dudit corps 2. Ainsi, le dispositif de fixation maintient le corps tubulaire 2 sous forme d'une canalisation munie du cavalier oméga 7 contre la caisse pendant l'opération de coiffage. Ceci permet d'éviter les détériorations de la canalisation 2 et de son cavalier 7 lors d'une opération de coiffage.

Un tel dispositif de fixation peut être posé sur l'obturateur 3 par pression dans le cas d'une bague 4 avec une interruption ou par coulissement le long de l'obturateur 3 soit chez le fournisseur de la canalisation 2 ou par l'opérateur en bord de ligne. Après action des moyens d'indexage 6, 6bis, 13, le dispositif de fixation maintient le cavalier oméga 7 orienté parallèlement à la partie du véhicule formant support 10 durant son temps de montage.

Ensuite, lors d'un enlèvement de l'obturateur 3, ce qui est le cas pour une fixation temporaire, le dispositif de fixation est enlevé avec l'obturateur 3. Le dispositif de fixation 1 est avantageusement recyclable.

Les moyens d'indexage conformes à la présente invention permettent de supprimer l'utilisation de pièces auxiliaires telles qu'élastiques, sangles ou adhésifs pour le maintien de l'organe en position lors de la fixation. Le cas échéant, lesdits moyens permettent aussi de faciliter l'opération ultérieure d'enfilage de l'organe sous la forme d'un cavalier oméga sur un élément de raccord tel qu'une vis lors de son raccordement définitif à un système final, par exemple un circuit de freinage.

De tels moyens d'indexage peuvent être mis en place par un opérateur directement sur la ligne de production tout en améliorant la facilité et la qualité de montage.

## Revendications

1. Elément de fixation (1) à un support (10) d'un corps tubulaire (2) portant à sa périphérie avec liberté de mouvement un organe (7), ledit élément (1) présentant une partie principale sous forme d'une bague (4) entourant directement ou indirectement au moins partiellement ledit corps tubulaire (2), à partir de laquelle bague (4) s'étend un bras de solidarisation (5) vers le support (10) en étant apte à être solidarisé audit support (10), **caractérisé en ce que** ledit élément (1) comporte des moyens d'indexage (6, 6bis, 13) dans une position donnée de l'organe (7) porté par ledit corps (2).

2. Elément de fixation (1) selon la revendication précédente, pour lequel l'extrémité libre du bras de solidarisation (5) porte une protubérance (13) dépassant transversalement du bras (5) et apte à réaliser la solidarisation par clippage de l'élément (1) avec le support (10), ladite protubérance (13) formant également lesdits moyens d'indexage (6, 6bis, 13) en formant butée en rotation pour ledit organe (7).

3. Elément de fixation (1) selon la revendication 1, pour lequel lesdits moyens d'indexage (6, 6bis, 13) forment des butées en rotation pour ledit organe (7) en étant soit sous la forme de deux plaques (6) portées symétriquement par le bras (5), les plaques (6) s'étendant de chaque côté du bras (5) perpendiculairement audit bras (5) ou soit sous la forme d'un pavé (6bis) porté par la bague (4) à une portion de ladite bague (4) diamétralement opposée audit bras (5).

4. Elément de fixation (1) selon l'une quelconque des revendications précédentes, pour lequel le bras (5) de solidarisation est formé de deux branches s'étendant parallèlement l'une à l'autre vers le support (10) avec l'extrémité libre d'une branche recourbée vers l'extrémité libre de l'autre branche, ces deux branches étant déformables sous contrainte transversale afin d'être rapprochées l'une de l'autre.

5. Dispositif de fixation à un support (10) d'un corps tubulaire (4) portant à sa périphérie avec liberté de mouvement un organe (7), **caractérisé en ce que** le dispositif comprend un élément de fixation (1) selon l'une quelconque des revendications précédentes, le dispositif comprenant une pièce de réception (3) de l'élément de fixation (1), sur laquelle pièce (3) est montée la bague (4) dudit élément (1), la pièce de réception (3) étant montée autour du corps tubulaire (2).

6. Dispositif de fixation selon la revendication précédente, pour lequel la bague (4) de l'élément (1) est montée autour de la pièce de réception (3) par coulissement axial autour de ladite pièce (3).

7. Dispositif de fixation selon la revendication 5, pour lequel la bague (4) de l'élément (1) est montée autour de la pièce de réception (3) par pression transversale sur ladite pièce (3), la bague (4) de l'élément de fixation (1) présentant une interruption de son pourtour facilitant sa mise en place autour de la pièce de réception (3) par appui de l'interruption de la bague (4) transversalement à ladite pièce de réception (3) et déformation élastique de ladite interruption pour l'insertion de la bague (4) autour de ladite pièce (3).

8. Corps tubulaire (2) présentant une extrémité libre destinée à être fixée à un support (10), cette extrémité portant à sa périphérie un organe (7) rotatif autour dudit corps (2), **caractérisé en ce qu'**il est muni d'un dispositif de fixation selon l'une quelconque des trois revendications précédentes, la pièce de réception (3) étant un obturateur recouvrant ladite extrémité libre dudit corps (2).

9. Corps tubulaire (2) selon la revendication précédente, lequel est une canalisation, l'organe (7) rotatif étant sous forme d'un cavalier oméga dont une portion (12) de chacune de ses extrémités libres est en butée sur un moyen d'indexage (6, 6bis, 13) respectif du dispositif de fixation.

10. Procédé de fixation à un support (10) d'un corps tubulaire (2) portant à sa périphérie avec liberté de mouvement un organe (7), ce procédé mettant en oeuvre le dispositif de fixation selon l'une quelconque des revendications 5 à 7, le dispositif de fixation étant muni d'une pièce de réception (3) d'un élément de fixation (1) portant un bras (5) dont l'extrémité libre est apte à coopérer avec un moyen complémentaire (11) prévu dans le support (10) pour la solidarisation du corps tubulaire (2) avec le support (10) et des moyens d'indexage (6, 6bis, 13) dans une position donnée dudit organe (7), la pièce de réception (3) étant destinée à être fixée à une extrémité du corps tubulaire (2), ledit procédé comprenant les étapes suivantes :
- montage ou intégration respective de l'élément de fixation (1) sur ou dans le dispositif de fixation,
- montage du dispositif de fixation sur l'extrémité du corps tubulaire (2), d'une part, en présentant l'extrémité libre du bras (5) en regard du moyen complémentaire dudit support (10) et, d'autre part, en indexant dans une position donnée ledit organe (7), l'étape de montage de l'élément de fixation (1) et l'étape de montage du dispositif de fixation pouvant être inversées,
- solidarisation du corps tubulaire (2) avec le support (10) par coopération entre extrémité libre du bras (5) et moyen complémentaire (11) du support (10), l'indexage dudit organe (7) étant maintenu.

## Patentansprüche

1. Befestigungselement (1) an einem Träger (10) eines röhrenförmigen Körpers (2), der an seinem Umfang mit Bewegungsfreiheit ein Organ (7) trägt, wobei das Element (1) einen Hauptteil in Form eines Rings (4) aufweist, der den röhrenförmigen Körper (2) direkt oder indirekt wenigstens teilweise umgibt, wobei sich ausgehend von dem Ring (4) ein Befestigungsarm (5) zu dem Träger (10) erstreckt und geeignet ist, mit dem Träger (10) fest verbunden zu werden, **dadurch gekennzeichnet, dass** das Element (1) Positionierungsmittel (6, 6bis, 13) in einer gegebenen Position des Organs (7), das von dem Körper (2) getragen wird, umfasst.

2. Befestigungselement (1) nach dem vorhergehenden Anspruch, für das das freie Ende des Befestigungsarms (5) einen Vorsprung (13) trägt, der quer von dem Arm (5) vorsteht und geeignet ist, die feste Verbindung durch Clipsen des Elements (1) mit dem Träger (10) auszuführen, wobei der Vorsprung (13) auch die Positionierungsmittel (6, 6bis, 13) bildet, indem er einen Drehungsanschlag für das Organ (7) bildet.

3. Befestigungselement (1) nach Anspruch 1, für das die Positionierungsmittel (6, 6bis, 13) Drehungsanschläge für das Organ (7) bilden, indem sie entweder die Form von zwei Platten (6) haben, die symmetrisch von dem Arm (5) getragen werden, wobei sich die Platten (6) auf jeder Seite des Arms (5) senkrecht zu dem Arm (5) erstrecken, oder in der Form eines Blocks (6bis), der von dem Ring (4) an einem Abschnitt des Rings (4) diametral dem Arm (5) gegenüberliegend getragen wird.

4. Befestigungselement (1) nach einem der vorhergehenden Ansprüche, für das der Befestigungsarm (5) aus zwei Schenkeln gebildet ist, die sich parallel zueinander zu dem Träger (10) mit dem freien Ende eines Schenkels zu dem einen Ende des anderen Schenkels zurückgebogen erstrecken, wobei diese zwei Schenkel unter Belastung verformbar sind, um einander genähert zu werden.

5. Befestigungsvorrichtung an einem Träger (10) eines röhrenförmigen Körpers (4), der an seinem Umfang mit Bewegungsfreiheit ein Organ (7) trägt, **dadurch gekennzeichnet, dass** die Vorrichtung ein Befestigungselement (1) nach einem der vorhergehenden Ansprüche umfasst, wobei die Vorrichtung ein Aufnahmeteil (3) des Befestigungselements (1) umfasst, wobei auf dem Teil (3) der Ring (4) des Elements (1) montiert ist, wobei das Aufnahmeteil (3) um den röhrenförmigen Körper (2) montiert ist.

6. Befestigungsvorrichtung nach dem vorhergehenden Anspruch, für die der Ring (4) des Elements (1) um das Aufnahmeteil (3) durch axiales Gleiten um das Teil (3) montiert ist.

7. Befestigungsvorrichtung nach Anspruch 5, für die der Ring (4) des Elements (1) um das Aufnahmeteil (3) durch Querdruck auf das Teil (3) montiert ist, wobei der Ring (4) des Befestigungselements (1) eine Unterbrechung seines Umfangs aufweist, die sein Anbringen um das Aufnahmeteil (3) durch Drücken der Unterbrechung des Rings (4) quer zu dem Aufnahmeteil (3) sowie elastisches Verformen der Unterbrechung zum Einfügen des Rings (4) um das Teil (3) erleichtert.

8. Röhrenförmiger Körper (2), der ein freies Ende aufweist, das dazu bestimmt ist, an einem Träger (10) befestigt zu werden, wobei dieses Ende an seinem Umfang ein Organ (7) trägt, das um den Körper (2) drehend ist, **dadurch gekennzeichnet, dass** er mit einer Befestigungsvorrichtung nach einem der drei vorhergehenden Ansprüche versehen ist, wobei das Aufnahmeteil (3) ein Verschluss ist, der das freie Ende des Körpers (2) abdeckt.

9. Röhrenförmiger Körper (2) nach dem vorhergehenden Anspruch, der eine Kanalisation ist, wobei das drehende Organ (7) die Form eines Omega-Reiters hat, von dem ein Abschnitt (12) jedes seiner freien Enden auf einem Positionierungsmittel (6, 6bis, 13) der jeweiligen Befestigungsvorrichtung im Anschlag ist.

10. Verfahren zum Befestigen an einem Träger (10) eines röhrenförmigen Körpers (2), der an seinem Umfang mit Bewegungsfreiheit ein Organ (7) trägt, wobei dieses Verfahren die Befestigungsvorrichtung nach einem der Ansprüche 5 bis 7 umsetzt, wobei die Befestigungsvorrichtung mit einem Aufnahmeteil (3) eines Befestigungselements (1) versehen ist, das einen Arm (5) trägt, dessen freies Ende geeignet ist, mit einem ergänzenden Mittel (11), das in dem Träger (10) vorgesehen ist, für die feste Verbindung des röhrenförmigen Körpers (2) mit dem Träger (10) zusammenzuwirken, und Mittel zum Positionieren (6, 6bis, 13) in einer gegebenen Position des Organs (7), wobei das Aufnahmeteil (3) dazu bestimmt ist, an einem Ende des röhrenförmigen Körpers (2) befestigt zu werden, wobei das Verfahren die folgenden Schritte umfasst:
- jeweils Montage oder Integration des Befestigungselements (1) auf oder in der Befestigungsvorrichtung,
- Montage der Befestigungsvorrichtung auf dem Ende des röhrenförmigen Körpers (2), einerseits unter Anhalten des freien Endes des Arms (5) gegenüber dem ergänzenden Mittel des Trägers (10) und, andererseits, durch Positionieren des Organs (7) in einer gegebenen Position, wobei der Montageschritt des Befestigungselements (1) und der Montageschritt der Befestigungsvorrichtung umgekehrt werden können,
- feste Verbindung des röhrenförmigen Körpers (2) mit dem Träger (10) durch Zusammenwirken zwischen dem freien Ende des Arms (5) und dem ergänzenden Mittel (11) des Trägers (10), wobei die Positionierung des Organs (7) beibehalten wird.

## Claims

1. An element (1) for attaching to a mounting (10) a tubular body (2) comprising a member (7) on the periphery thereof with freedom of movement, said element (1) having a main portion in the form of a ring (4) surrounding directly or indirectly at least partially said tubular body (2), from which ring (4) a securing arm (5) extends towards the mounting (10), being able to be secured to said mounting (10), **characterized in that** said element (1) comprises means (6, 6bis, 13)for indexing the member (7) supported by said body (2) into a predetermined position.

2. The attachment element (1) according to the preceding claim, for which the free end of the securing arm (5) carries a protuberance (13) protruding transversely from the arm (5) and able to realize the securing of the element (1) with the mounting (10) by clipping, said protuberance (13) also forming said indexing means (6, 6bis, 13) by forming a stop in rotation for said member (7).

3. The attachment element (1) according to Claim 1, for which said indexing means (6, 6bis, 13) form stops in rotation for said member (7) by being either in the form of two plates (6) carried symmetrically by the arm (5), the plates (6) extending on each side of the arm (5) perpendicularly to said arm (5), or in the form of a block (6bis) carried by the ring (4) at a portion of said ring (4) diametrically opposed to said arm (5).

4. The attachment element (1) according to any one of the preceding claims, for which the securing arm (5) is formed by two branches extending parallel to one another towards the mounting (10) with the free end of one branch bent towards the free end of the other branch, these two branches being deformable under transverse stress so as to be brought nearer to one another.

5. A device for attaching to a mounting (10) a tubular body (4) comprising a member (7) on the periphery thereof with freedom of movement, **characterized in that** the device includes an attachment element (1) according to any one of the preceding claims, the device including a receiving part (3) of the attachment element (1), on which part (3) there is mounted the ring (4) of said element (1), the receiving part (3) being mounted around the tubular body (2).

6. The attachment device according to the preceding claim, for which the ring (4) of the element (1) is mounted around the receiving part (3) by axial sliding around said part (3).

7. The attachment device according to Claim 5, for which the ring (4) of the element (1) is mounted around the receiving part (3) by transverse pressure on said part (3), the ring (4) of the attachment element (1) having an interruption of its periphery facilitating its being placed around the receiving part (3) by bearing of the interruption of the ring (4) transversely to said receiving part (3) and elastic deformation of said interruption for the insertion of the ring (4) around said part (3).

8. A tubular body (2) having a free end intended to be fixed to a mounting (10), this end having at its periphery a rotary member (7) around said body (2), **characterized in that** it is provided with an attachment device according to any one of the three preceding claims, the receiving part (3) being a plug covering said free end of said body (2).

9. The tubular body (2) according to the preceding claim, which is a pipe, the rotary member (7) being in the form of an omega bracket, a portion (12) of each of the free ends of which engages with a means for indexing (6, 6bis, 13) with respect to the attachment device.

10. A method for attaching to a mounting (10) a tubular body (2) comprising a member (7) on the periphery thereof with freedom of movement, this method implementing the attachment device according to any one of Claims 5 to 7, the attachment device being provided with a receiving part (3) of an attachment element (1) carrying an arm (5), the free end of which is able to cooperate with a complementary means (11) provided in the mounting (10) for the securing of the tubular body (2) with the mounting (10) and indexing means (6, 6bis, 13) in a given position of said member (7), the receiving part (3) being intended to be attached to an end of the tubular body (2), said method including the following steps:
- mounting or respective integration of the attachment element (1) on or in the attachment device,
- mounting of the attachment device on the end of the tubular body (2), on the one hand, by presenting the free end of the arm (5) opposite the complementary means of said mounting (10) and, on the other hand, by indexing said member (7) in a given position, the mounting step of the attachment element (1) and the mounting step of the attachment device being able to be reversed,
- securing of the tubular body (2) with the mounting (10) by cooperation between free end of the arm (5) and complementary means (11) of the mounting (10), the indexing of said member (7) being maintained.
